# EUROPEAN PATENT SPECIFICATION

(11) **EP 0 349 250 B1**
(45) Date of publication and mention of the grant of the patent: **04.05.1994**
(21) Application number: 89306487.3
(22) Date of filing: 27.06.1989
(51) Int. Cl.: F16K 11/048, F16K 15/02, F16K 15/04

(54) **AND-type control valve**
Regelventil vom Typ UND
Soupape de réglage du type ET

(30) Priority: 01.07.1988 GB 8815703
(43) Date of publication of application: 03.01.1990
(73) Proprietor: WABCO AUTOMOTIVE U.K. LIMITED, Rugby, Warwickshire, CV21 2NL (GB)
(72) Inventor: Knowles, James Grahame, Welton Lincoln, LN2 3NP (GB)
(74) Representative: Arthur, Bryan Edward

(56) References cited:
- EP-A- 0 110 289
- DD-A- 48 274
- DE-C- 1 028 404
- US-A- 1 409 116
- US-A- 2 395 941
- US-A- 2 847 182

## Description

This invention relates to an AND-type control valve particularly though not exclusively, for use in controlling operation of a trailer brake valve in a master cylinder-type vehicle braking system.

Many constructional and agricultural vehicles employ separate hydraulic braking circuits for the left hand and right hand sides of the vehicle for the purpose of steering or assisting in the steering of the vehicle.

They may be high pressure circuits supplied by a pump or accumulator, or simple master cylinder/slave cylinder circuits as per most agricultural vehicles. In this case it is usual to have two independent master cylinders, each operated by its own brake pedal, and for the purpose of braking the vehicle, the two pedals are coupled together, and for the purpose of steering the two pedals are uncoupled and operated separately.

When the vehicle is fitted with a trailer brake valve, operated by the vehicle's own brakes, it is desirable for the trailer brakes to operate only when the vehicle brakes are used for braking and not for steering. As such, it is necessary for the trailer brake valve to operate only when both right hand and left hand brake circuits are pressurised.

Such a valve, using control logic terms, can be known as a "AND" type trailer brake valve.

Various forms of "AND" type logic valves are well known, one such case being two opposing non-return valves with a push rod interspaced between them of sufficient length so that when one non-return valve is seated, the other is held open by the push rod. A similar type can be constructed without the push rod, providing the two opposing poppet elements are either extended or their seats are placed so close together so as to prevent both from closing at the same time. In each case the poppet element is made to close by the action of fluid through the circumferential area between the poppet and the seat and to ensure that flow is not too large this area must be kept small. However, for master cylinder type braking systems, the flow required to close this type of logic valve, represents a leakage flow and increased pedal travel and must therefore be kept to a minimum. This then means controlling the circumferential area to unacceptably tight tolerances.

One object of the present invention is to avoid these problems.

DD-A-48274 discloses a hydraulic AND valve according to the features of the preamble of claim 1, having, as is usual, two inlets and a single outlet. Identical non-return valves are provided in each inlet and arranged such that both cannot be closed at the same time.

According to the invention, we propose an AND type control valve comprising an outlet port, two input flowpaths communicating with the outlet port each via a non-return valve, the non-return valves being arranged such that both cannot be closed at the same time, characterised in that each non-return valve has associated therewith flow sensitive means to assist closure of the respective non-return valve, the flow sensitive means each comprising piston means having an orifice providing a restricted flowpath from one side of the piston means to the other, and operation of the associated non-return valve being responsive to movement of the piston means, in use the respective orifice causing a pressure drop which assists closure of the associated non-return valve.

In one embodiment, the non-return valve is a poppet valve element integral with the piston which runs in a bore concentric with the valve seat. When the pistons are each downstream of their associated poppet valve the pistons are opposed and abut so as to ensure that when one non-return valve is closed, the other is held open.

In an alternative embodiment the pistons and their respective orifices could be positioned upstream of the poppet seats, whereby the pressure drop across the piston causes a pushing force to close the poppet, instead of a pulling force. The piston and poppet could then be separate components if it was found advantageous to a particular manufacturing method. For example, the poppet seat and piston bore need not be concentric, and the poppet could be replaced by a ball.

The invention includes a tractor-trailer braking system comprising separate hydraulic circuits controlling respectively brakes for the left hand and right hand sides of the vehicle, a trailer brake valve responsive to a control signal from the outlet port of an AND-type control valve according to this invention, one of said input flowpaths thereof being connected one to the left hand hydraulic circuit and the other being connected to the right hand hydraulic circuit.

An embodiment of the invention will now be described by way of example with reference to the accompanying drawings in which:
Figure 1 is a schematic circuit diagram of a trailer braking system incorporating an AND-type control valve according to the invention;
Figure 2 is a cross-section through a preferred embodiment of AND-type control valve;
Figure 3 is a cross-section on A-A in Figure 2; and
Figure 4 is a schematic cross-section of an alternative embodiment of AND-type control valve.

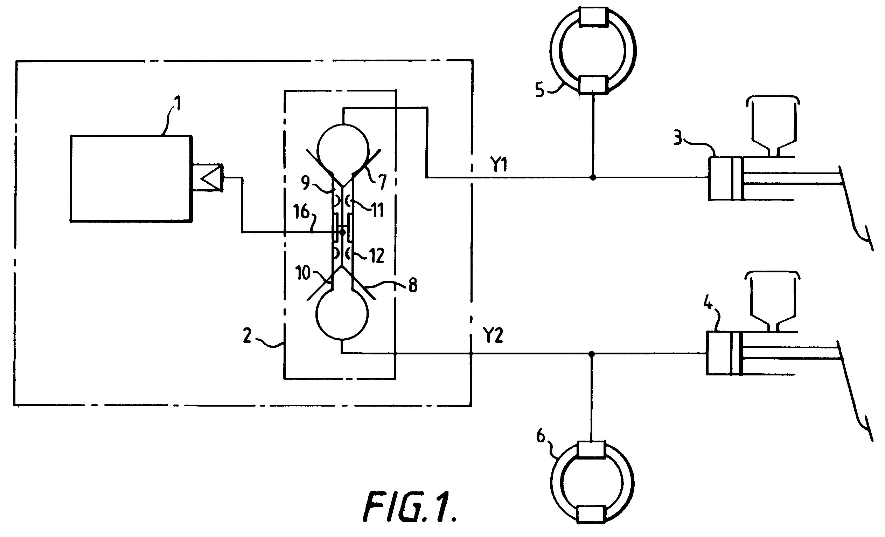

The circuit of Figure 1 includes a trailer brake valve 1 and an "AND"-type control valve or head 2 with two inputs Y1 and Y2. These are supplied with fluid from hydraulic master cylinders 3 and 4 respectively which are also connected to the vehicle's brakes, in this case an agricultural tractor, 5 and 6. The "AND" head has two opposing non-return valves 7, 8 with integral pistons 9, 10 of sufficient length to prevent both non-return valves from closing at the same time, also each piston incorporates an orifice 11 and 12. Between the two non-return valves is a passage (outlet port) 16 leading to trailer brake valve 1. When pressurised trailer brake valve 1 operates to produce a proportionally higher pressure at the trailer brakes.

If pressure is raised in the master cylinder 3 only, for the purpose of steering the tractor, say to the right, the right hand tractor brake 5 will operate and port Y1 will be pressurised. If non-return valve 7 is already closed then the trailer brake valve 1 will not operate. If, however, non-return valve 7 is open, then a small flow of fluid will pass across the orifices 11 and 12, through non-return valve 8 and be returned to the non-pressurised master cylinder 4 and to the usually common reservoir. The pressure to operate non-return valve 8 will be very low and insufficient to operate the trailer brake valve 1, via passage 16. Also, the flow throughout orifices 11 and 12 will create a pressure drop across the pistons 9 and 10 to further open non-return valve 8 and close non-return valve 7, preventing further flow leaking from master cylinder 3 to master cylinder 4. Since the flow to close non-return valve 7 is determined by the size of orifice 11, the circumferential area formed by the poppet opening can be relatively large, removing the need for tight tolerances on the poppet lift. Also, the flow can be made to be extremely small.

Similarly, if pressure is raised in master cylinder 4 only, the left hand tractor brake 6 will be applied and the vehicle will steer to the left. Also pressure will be applied to port Y2 and non-return valve 8 will be closed or made to close as described above, and the trailer brake valve 1 will still not operate.

If the pedals of master cylinders 3 and 4 are coupled together, then depressing either pedal will raise pressure in both master cylinders and both tractor brakes 5 and 6 will be applied. Since it is customary for most dual brake circuits to have some means of equalising the pressure (not shown), in the two circuits when both lines are pressurised, then the tractor will be retarded in a straight line, without steering to the right or left. Also, pressure will be applied to both ports Y1 and Y2. Since both non-return valves 7, 8 cannot be closed at the same time, pressure will be transmitted through the open non-return valve to passage 16 and the trailer brake valve 1 will operate. Therefore the trailer brake valve only operates when both brakes lines are pressurised, i.e. when the tractor brakes are coupled together and operated for the purpose of retarding the vehicle and the trailer brake valve does not operate when only one tractor brake is applied, for the purpose of steering the vehicle.

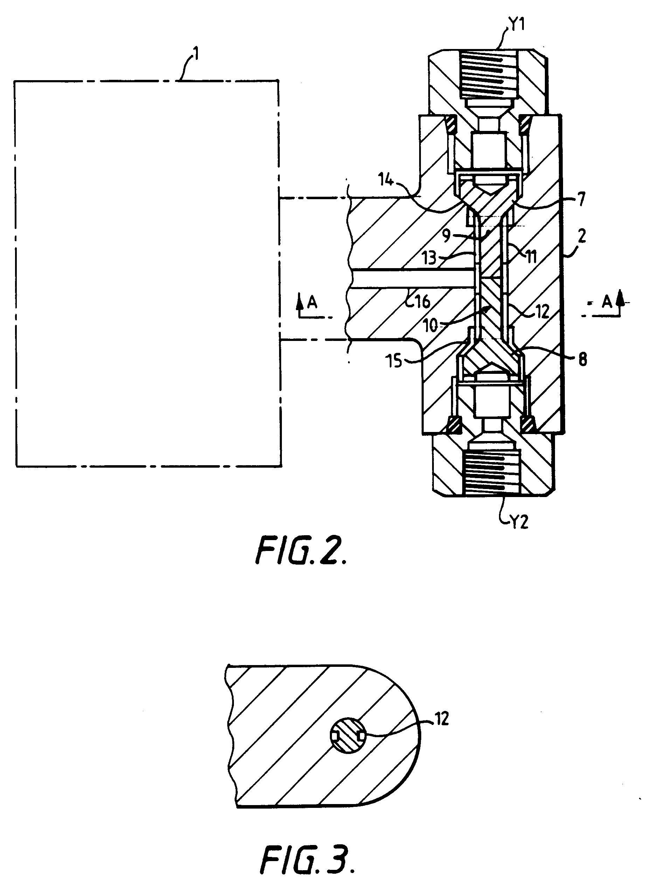

A preferred embodiment, the dual input "AND" head 2, attached to a trailer brake valve 1, by two bolts (not shown) is shown in Figure 2.

The "AND" head contains a through bore 13, with two opposing, concentric, cone seats 14 and 15. Slidably engaged in bore 13 are two poppets 7, 8 with integral pistons 9, 10 containing two diametrically opposite, axial grooves, which when engaged in bore 13, form axial orifices 11, 12. The combined lengths of pistons 9, 10 is such that only one poppet 7,8 can be closed against its corresponding seat 14, 15 at the same time. The end of each piston 9,10 is reduced to allow flow communication with cross hole 16, which connects with trailer brake valve 1.

The "AND" head functions as previously described with each poppet, in the steering mode, being closed or made to close by the action of fluid passing through its corresponding orifice 11, 12. The orifices could be sharp edges and positioned either radially or axially, but a long, thin orifice as shown, increases the flow sensitivity.

The poppets could be made of various metals, with or without an elastomeric seal, but a preferred design utilises an injection moulded plastic, with sufficient resilience, tensile strength, temperature and creep resistance etc., to give a 100% leak free seal, at the extremes of temperature and pressure imposed by a tractor braking system. Injection moulded plastic also has the advantages of light weight and low friction, increasing still further the flow sensitivity of the design and is economical to produce, since no machining is required.

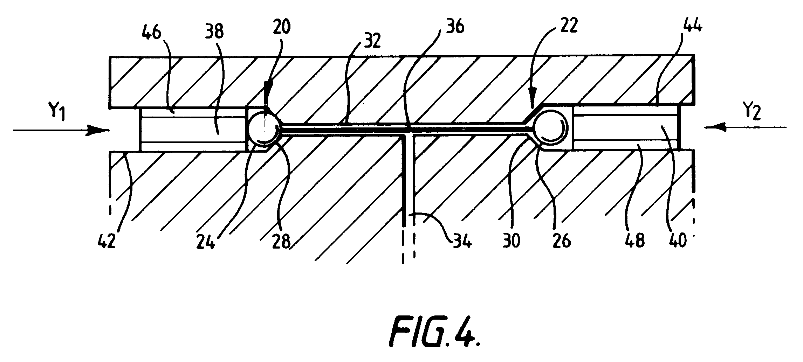

In the alternative embodiment shown in Figure 4, the opposed non-return valves 20 and 22 are formed by balls 24 and 26 cooperating respectively with conical seats 28 and 30. A passage 32 communicating between the seats 28, 30 and with a passage 34 connected to the output port, contains a push rod 36 the length of which is such that when one ball (24 shown) is seated the push rod 36 lifts the other ball (26 shown) from its seat. Thus, the two non-return valves cannot be closed at the same time. Pistons 38 and 40 are disposed respectively in the bores 42 and 44 upstream of the associated non-return valve in the input flowpath from the input port Y1, Y2 so that the resistance to flow along the orifices 46 and 48 creates a pressure drop causing movement of the piston to push the ball 24, 26 into its seat.

## Claims

1. An AND type control valve comprising an outlet port (16;34), two input flowpaths (Y1,Y2) communicating with the outlet port (16;34) each via a non-return valve (7,8;20,22), the non-return valves (7,8;20,22) being arranged such that both cannot be closed at the same time, characterised in that each non-return valve (7,8;20,22) has associated therewith flow sensitive means to assist closure of the respective non-return valve (7,8;20,26), the flow sensitive means each comprising piston means (9,10;38,40) having an orifice (11,12;46,48) providing a restricted flowpath from one side of the piston means to the other, and operation of the associated non-return valve being responsive to movement of the piston means, in use the respective orifice causing a pressure drop which assists closure of the associated non-return valve.

2. A valve according to claim 1 wherein the piston means comprises a piston (9,10;38,40) running in a bore (13;42,44) and the orifice (11,12;46,48) is a groove formed along an outer surface of the piston.

3. A valve according to claim 2 wherein the groove (11,12;46,48) extends in a straight line substantially parallel to a longitudinal axis of the piston.

4. A valve according to claim 2 or claim 3 wherein each non-return valve comprises a valve element (7,8) integral with a respective piston (9,10) which runs in a bore (13) concentric with the respective valve seat (14,15).

5. A valve according to claim 4 wherein each piston (9,10) is disposed downstream of the associated valve element (7,8), the pistons (9,10) being opposed and in abutment such that when one non-return valve is closed, the other is open.

6. A valve according to any one of claims 1 to 5 wherein each non-return valve is a poppet-type valve.

7. A valve according to any of claims 1-3 wherein each non-return valve (20,22) comprises a valve element (24,26) cooperating with a valve seat (28,30), each piston means comprises a piston (38,40) disposed upstream of the respective valve element (24,26), and wherein a push rod (36) is disposed for movement in a passage (32) communicating between the valve seats (28,30) to lift the valve element (24,26) of one return valve from its seat when the other non-return valve is seated.

8. A vehicle braking system comprising separate hydraulic circuits controlling respectively brakes for the left hand and right hand sides of the vehicle, a first valve responsive to a control signal from the outlet port (16;34) of an AND-type control valve according to any one of the preceding claims, one of the said input flowpaths thereof being connected to the left hand hydraulic circuit and the other being connected to the right hand hydraulic circuit.

9. A system according to claim 8 on a tractor-trailer combination wherein the said first valve is a trailer brake valve.

## Patentansprüche

1. Regelventil vom Typ UND, mit einem Auslaßkanal (16; 34), zwei Eingangs-Strömungswegen (Y1, Y2), die mit dem Auslaßkanal (16; 34) jeweils über ein Rückschlagventil (7, 8; 20, 22) in Verbindung sind, wobei die Rückschlagventile (7, 8; 20, 22) so angeordnet sind, daß nicht beide gleichzeitig geschlossen sein können, dadurch gekennzeichnet, daß jedes Rückschlagventil (7, 8; 20, 22) ein ihm zugehöriges strömungsempfindliches Mittel besitzt, um das Schließen des betreffenden Rückschlagventils (7, 8; 20, 22) zu unterstützen, jedes strömungsempfindliche Mittel eine Kolbenanordnung (9, 10; 38, 40) mit einer Öffnung (11, 12; 46, 48) aufweist, die einen eingeschränkten Strömungsweg von einer Seite der Kolbenanordnung zur anderen hin zur Verfügung stellt, und der Betrieb des zugehörigen Rückschlagventils unter Einfluß der Bewegung der Kolbenanordnung erfolgt, indem die betreffende Öffnung bei der Benutzung einen Druckabfall bewirkt, der das Schließen des zugehörigen Rückschlagventils unterstützt.

2. Ventil nach Anspruch 1, bei dem die Kolbenanordnung einen Kolben (9, 10; 38, 40) aufweist, der sich in einer Bohrung (13; 42, 44) bewegt, und die Öffnung (11, 12; 46, 48) eine Nut ist, die längs einer äußeren Oberfläche des Kolbens ausgebildet ist.

3. Ventil nach Anspruch 2, bei dem sich die Nut (11, 12; 46, 48) in einer geraden Linie im wesentlichen parallel zu einer Längsachse des Kolbens erstreckt.

4. Ventil nach Anspruch 2 oder 3, bei dem jedes Rückschlagventil ein Ventilelement (7, 8) aufweist, das einstückig mit einem zugeordneten Kolben (9, 10) ist, der sich in einer Bohrung (13) bewegt, die zum betreffenden Ventilsitz (14, 15) konzentrisch ist.

5. Ventil nach Anspruch 4, bei dem jeder Kolben (9, 10) stromabwärts von dem zugehörigen Ventilelement (7, 8) angeordnet ist, die Kolben (9, 10) einander gegenüberliegend sind und sich so aneinander abstützen, daß, wenn ein Rückschlagventil geschlossen ist, das andere geöffnet ist.

6. Ventil nach einem der Ansprüche 1 bis 5, bei dem jedes Rückschlagventil ein Ventil der einen Ventilkegel aufweisenden Art ist.

7. Ventil nach einem der Ansprüche 1 bis 3, bei dem jedes Rückschlagventil (20, 22) ein mit einem Ventilsitz (28, 30) zusammenwirkendes Ventilelement (24, 26) aufweist, jede Kolbenanordnung einen Kolben (38, 40) aufweist, der stromaufwärts des zugeordneten Ventilelements (24, 26) angeordnet ist, und bei dem eine Schubstange (36) für eine Bewegung in einem Durchgang (32) angeordnet ist, der eine Verbindung zwischen den Ventilsitzen (28, 30) bildet, um das Ventilelement (24, 26) jeweils eines Rückschlagventils von seinem Sitz abzuheben, wenn das jeweils andere Rückschlagventil sich im Sitz befindet.

8. Fahrzeugbremssystem mit getrennten Hydraulikkreisen, die Bremsen für die linke bzw. die rechte Fahrzeugseite steuern, einem ersten Ventil, das auf ein Steuersignal vom Auslaßkanal (16; 34) eines Regelventils vom Typ UND gemäß einem der vorausgehenden Ansprüche anspricht, wobei einer von dessen genannten Eingangs-Strömungswegen mit dem Hydraulikkreis der linken Seite und der andere mit dem Hydraulikkreis der rechten Seite in Verbindung ist.

9. System nach Anspruch 8 bei einer Zugmaschine-Anhänger-Kombination, bei dem das genannte erste Ventil ein Anhängerbremsventil ist.

## Revendications

1. Soupage de réglage du type ET comprenant un orifice de sortie (16;34), deux conduits d'entrée (Y1, Y2) qui communiquent chacun avec l'orifice de sortie (16 ; 34) par l'intermédiaire d'une soupape anti-retour (7,8 ; 20,22), les soupapes anti-retour (7,8 ; 20,22) étant disposées de façon à ne pas pouvoir être formées toutes les deux en même temps, caractérisée en ce qu'à chaque soupape anti-retour (7,8 ; 20, 22) est associé un dispositif sensible à l'écoulement pour aider la fermeture de la soupape anti-retour respective (7,8 ; 20,26), chaque dispositif sensible à la pression comprenant un moyen à piston (9,10 ; 38,40) qui présente un orifice (11,12 ; 46,48) procurant un chemin d'écoulement réduit allant d'un côté à l'autre du moyen à piston, et le fonctionnement de la souupape anti-retour associée répondant au déplacement du dispositif à piston, l'orifice respectif provoquant, lors du fonctionnement, une chute de pression qui aide la fermeture de la soupape anti-retour associée.

2. Soupape selon la revendication 1, dans laquelle le moyen à piston comprend un piston (9,10 ; 38, 40) se déplaçant dans un perçage (13 ; 42,44), et l'orifice (11,12 ; 46,48) est une gorge formée le long d'une surface extérieure du piston.

3. Soupape selon la revendication 2 dans laquelle la gorge (11,12 ; 46,48) est rectiligne et s'étend de façon pratiquement parallèle à un axe longitudinal du piston.

4. Soupape selon la revendication 2 ou la revendication 3, dans laquelle chaque soupape anti-retour comprend un élément de soupape (7,8) qui fait partie intégrante d'un piston respectif (9,10) lequel se déplace dans un perçage (13) concentrique au siège de soupape (14,15) respectif.

5. Soupape selon la revendication 4 dans laquelle chaque piston (9,10) est disposé en aval de l'élément de clapet associé (7,8), les pistons (9,10) étant opposés et en aboutement de telle façon que, lorsqu'une des soupapes anti-retour est fermée, l'autre est ouverte.

6. Soupape selon l'une quelconque des revendications 1 à 5, dans laquelle chaque soupape anti-retour est un clapet.

7. Soupape selon l'une quelconque des revendications 1-3, dans laquelle chaque soupape anti-retour (20,22) comprend un élément de soupape (24,25) qui coopère avec un siège de soupape (28,30), chaque moyen à piston comprenant un piston (38,40) disposé en amont de l'élément de soupape respectif (24,26), et dans laquelle une tige de poussée (36) est disposée pour se déplacer dans un passage (32) qui communique entre les sièges de soupape (28,30) pour soulever de son siège l'élément de soupape (24,26) de l'une des soupapes anti-retour quand l'autre soupape anti-retour est fermée.

8. Système de freinage pour véhicule comprenant des circuits hydrauliques séparés qui commandent respectivement les freins des côtés droit et gauche du véhicule, une première soupape répondant à un signal de commande venant de l'orifice de sortie (16,34) d'une soupape de réglage du type ET selon l'une quelconque des revendications précédentes, l'un de ses passages d'entrée étant relié au circuit hydraulique de gauche et l'autre étant relié au circuit hydraulique de droite.

9. Système selon la revendication 8 équipant une combinaison de remorque et de tracteur, dans lequel ladite première soupape est une soupape du frein de la remorque.
